# EUROPEAN PATENT APPLICATION

(11) **EP 0 626 313 A1**
(43) Date of publication of application: **30.11.1994**
(21) Application number: 94106114.5
(22) Date of filing: 20.04.1994
(51) Int. Cl.: B65B 41/16, G01L 5/10

(54) **Device for feeding a packeting film**

(30) Priority: 28.04.1993 IT MI930842
(71) Applicant: OTEM OFFICINA TECNOMECCANICA ESECUZIONI E MONTAGGI S.r.l., I-20151 Milan (IT)
(72) Inventor: Tinivella, Valter, I-21052 Busto Arsizio, Varese (IT); Quaglia, Silvio, I-20142 Milano (IT)
(74) Representative: Luksch, Giorgio, Dr.-Ing.

(57) **Abstract**

A device for feeding film (6) for packeting articles in general, of the type comprising a plurality of guide rollers (1A, B, C, D) for the film (6), a motorized roller (2) connected to a drive motor (3) and arranged to feed the film (6) towards an entry station (8) of a packaging line, and means (5, 4) for sensing the film tension and movement.

The tension sensing means are at least one means (5) for measuring the pressure exerted by the film (6) on one (1C) of said guide rollers (1A-D).

## Description

This invention relates to device for feeding a film for packeting articles in general of the type comprising a plurality of guide rollers, at least one motorized roller connected to a drive motor and arranged to feed the film towards the entry station of a packaging line, and means for sensing the film tension and movement. In the present context a packeting film means any known plastics material usually used for packaging articles in general, in particular food products.

It is known to introduce the film into the entry station of a packaging line under a constant tension which must riot be influenced by the diameter of the reel from which the film is unrolled or by possible braking action exerted by members (such as usual automatic reel changers) positioned upstream of the motorized roller.

To measure the film tension it is known to use a movable guide roller of floating type. This movable roller is provided between the motorized roller and the entry station of the packaging line

It is also known to measure the film advancement speed by an encoder associated with the motor of the film drive members provided in the packaging line.

In known devices the motor connected to the motorized roller is controlled via a usual control unit of microprocessor type which receives as input the signals from said encoder and a signal relative to the position of said movable floating roller.

In this manner the speed of the motorized roller motor can be regulated on the basis of the speed of the film drive members and can be corrected on the basis of the floating roller position.

Although this device is widely used it has two serious drawbacks.

The first drawback is related to the fact that the usual film tension measurement means generally provide the control unit with false measurements if the film type varies, in particular if the elastic characteristics of the film used for packeting vary.

In addition as the film type varies, the extent of pull of the drive members along the packaging line also varies.

It therefore often happens that the control unit controlling the motor associated with the motorized roller controls the motor on the basis of false data.

Consequently with known devices, as the characteristics and speed of advancement of the film used for packeting vary, the packet dimensions (in particular its length) or the position of any writing on the film often undesirably vary.

An object of the present invention is to provide a device of the aforesaid type in which both the speed of advancement of the packeting film and its tension are always correctly measured, even in the case of films with different qualitative characteristics.

A further object is to provide a device of the aforesaid type in which the path between the motorized roller and the entry station of the packaging line is shorter than that of known devices and is not influenced by movable member such as a floating roller.

These and further objects which will be apparent to the expert of the art are attained by a device in accordance with the accompanying claims.

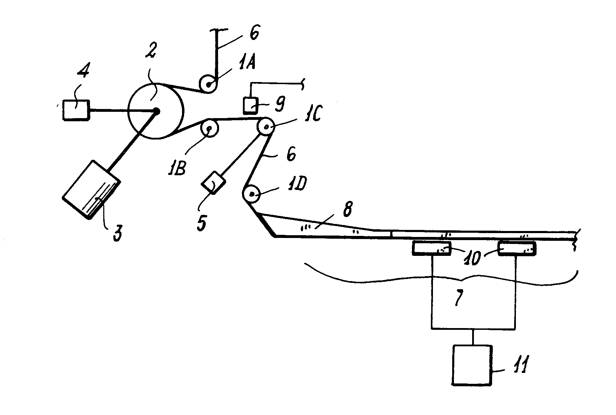

The present invention will be more apparent from the accompanying drawing, which is provided by way of non-limiting example and schematically represents a device of the invention associated with a packaging line (partly shown) .

With reference to said drawing, a device according to the invention comprises a plurality of guide rollers 1A, D, C, D (four are shown in the example), a motorized roller 2 connected to a drive motor 3, an encoder 4 associated with the motorized roller 2, and a sensor 5 for sensing the pressure exerted by a packeting film 6 on the guide roller 1C. By means of the motorized roller 2 the film 6 is unwound from a reel (not shown) provided above a packaging line 7 (partly shown) and is fed, guided by the rollers 1B, C, D, towards an entry; station 8 of said line 7.

The motorized roller 2 and the motor 3 connected to it are of conventional type as used for some time in known devices (for example of the type produced by the present applicant). It should be noted that, as is usual, the outer surface of the roller 2 in contact with the film is of known plastics material ensuring perfect dragging of the film and preventing any slippage of the film on the roller.

The encoder 4, of usual type, is associated with the roller 2 in the conventional manner known to the expert of the art and is arranged to sense the roller movement.

The guide rollers 1A-D are advantageously idle and are connected in the conventional manner, as is the motorized roller 2, to a support structure (not shown) such that their axis of symmetry and rotation is fixed.

It should be noted that as the guide rollers 1A-D can rotate only about their axis and as there is no slippage of the film on the roller 2, the encoder 4 in sensing the movement of the roller 2 also senses the effective movement of the film 6.

The pressure sensor 5 is a load cell associated in conventional manner with the roller 1C. The load cell is for example associated with a part of a central support pin (not shown) for the roller.

Between the two rollers 1B and 1C there is also provided a usual photoelectric cell 9 for sensing the position of any writing or designs on the film.

The packaging line 6 is for example of the type comprising the entry station 8 and rollers 10 for dragging and longitudinally welding the film. The parallel longitudinal edges of the film are brought together by a usual conveyor (not shown) provided in the entry station so as to continuously fold the film into a tube. The products to be packaged are introduced into the tube-folded film in the entry station by usual conveyor means (not shown). The rollers 10 then weld said major edges of the film together and cause it to advance thus folded and containing the products towards other components (not shown) of the packaging line.

The rollers 10 are connected to a common motor 11 by usual known connection means.

The motor 3 is controlled by a usual control unit, advantageously of microprocessor type, which receives as input the signals originating from the encoder 4, from the pressure sensor 5 and from sensors (not shown but conventional in known packaging lines) for sensing for example the movement of the line conveying means and the presence of a product in the entry station 8. More specifically, the pressure sensor 5 is the feedback element which informs the control unit regarding the pull which the roller 2 is exerting on the film held downstream of the roller 2 by the rollers 10. The control unit adjust the torque of the motor 3 so that a constant desired pull is exerted on the film.

It should be noted that the fact of having positioned the encoder 4 on the motorized roller 2 rather than on the rollers 10, as is usual in known devices, enables the control unit to receive a signal faithfully representing the advancement of the film and enabling the speed of the rollers 10 to be controlled to achieve a desired speed of advancement of the film along the packeting line. The speed of the rollers 10 is greater than the speed of the roller 2 because account has to be taken of the film slippage on the rollers 10. This slippage depends on the type of film and on the mechanics of the rollers 10. The factors determining this slippage are for example the type of roller knurling, the pressure between the roller and the backing roller, their diameter, eccentricity, inclination and temperature.

It should also be noted that controlling the motor 11 by feedback from a "remote" encoder 4 is made possible only in that a sufficiently "rigid" linkage exists between the roller 2 and the rollers 10 such as not to put the system into oscillation. In known devices comprising a floating roller for the constant tensioning of the film between the roller 2 and the station 8, the encoder 4 cannot be positioned on the roller 2 because the floating roller moves such as to vary the linkage between the rollers 10 and encoder 4, so introducing between them an instability factor which would make effective control of the rollers 10 impossible.

By virtue of the film tension measurement sensor 5, which in the device of the invention is a force transducer rather than a position transducer as in known devices, the measurement is no longer influenced by the physical characteristics of the film. This therefore ensures constant controlled tensioning of the film towards the station 8, so assuring correct operation of the usual members downstream of the rollers 10.

It should also be noted that in the device of the invention, as the length of the film path from the motorized roller 2 to the entry station 8 is fixed, the signal from the photoelectric cell 9 can also be used for conventional members (not shown) positioned before the motorized roller 2, for example for usual reel changing members. The film path from the roller 2 to the station 8 is also considerably shorter than in known devices, resulting in a reduction in the overall dimensions of the device.

Finally it should be noted that the described embodiment is provided by way of example and that numerous modifications are possible all falling within the same inventive concept. For example instead of an encoder 4 another usual position sensor could be associated with the motorized roller 2. In addition, the control of the motors 3 and 11 on the basis of the signals of the encoder 4 and cell 5 could be different from that described. In this respect, the motor 3 could be controlled by the encoder 4 and the signal from the cell 5 be used to control the motor 11 connected to the rollers 10, the torque of which in this case controls the film tensioning.

## Claims

1. A device for feeding film for packeting articles in general, of the type comprising a plurality of film guide rollers, a motorized roller connected to a drive motor and arranged to feed the film towards in entry station of a packaging line, and means for sensing the film tension and movement, characterised in that the tension sensing means are at least one means (5) for measuring the pressure exerted by the film (6) on one (1C) of said guide rollers (1A-D).

2. A device as claimed in claim 1, characterised in that the guide roller with which the means (5) for measuring the pressure exerted by the film (6) is associated is positioned between the motorized roller (2) and the entry station (8).

3. A device as claimed in claim 1, characterised in that the means for measuring the pressure exerted by the film (6) on the guide roller (1C) is a load cell (5).

4. A device as claimed in claim 1, characterised in that the means for sensing the film movement are at least one position sensor (4) associated with the motorized roller (2).

5. A device as claimed in claim 4, characterised in that the position sensor is a encoder (4).

6. A devise as claimed in claim 1, characterised in that the drive motor (3) for the motorized roller (2) is controlled electronically by a control unit which receives as input the signals from the means (5, 4) for sensing the tension and movement of the film (6).

7. A device as claimed in claim 1, characterised in that the guide rollers (1B, C, D) provided between the motorized roller (2) and the entry station (8) are movable only rotationally about their own axis.

8. A device as claimed in one of the preceding claims of the type comprising, downstream of the entry station, means for welding and/or dragging the film and the articles contained in it, and at least one drive member for said means; characterised in that said drive member is controlled electronically by the unit which controls the drive motor (3).
